# EUROPEAN PATENT APPLICATION

(11) **EP 4 317 892 A1**
(43) Date of publication of application: **07.02.2024**
(21) Application number: 23177031.4
(22) Date of filing: 02.06.2023
(51) Int. Cl.: F28F 1/42

(54) **HEAT EXCHANGER WITH HEAT TRANSFER AUGMENTATION FEATURES**

(30) Priority: 05.08.2022 US 202217881726
(71) Applicant: Hamilton Sundstrand Corporation, Charlotte, NC 28217-4578 (US)
(72) Inventor: TURNEY, Joseph, East Hartford 06118 (US)
(74) Representative: Dehns

(57) **Abstract**

A heat exchanger (10) includes a plurality of longitudinally-extending first channels (12) and a plurality of second channels (14) fluidly isolated from the plurality of first channels. Each first channel includes a plurality of internal fins (16) and a plurality of external fins (20). The internal fins extend from and are integrally formed with the internal walls (22) of the first channel. The external fins (24) connect adjacent first channels. The plurality of second channels is defined by external walls of the plurality of first channels and the plurality of external fins.

## Description

### STATEMENT OF GOVERNMENT INTEREST

This invention was made with government support under Contract No. DEAR0001121 awarded by United States Department of Energy. The government has certain rights in the invention.

### BACKGROUND

Heat exchangers are central to the functionality of numerous systems, including a variety of oil and air-cooling applications, recuperations, and waste heat harvesting for power cycles. These applications continually require increases in heat transfer performance, reductions in pressure loss, and reductions in size and weight. Current heat exchanger offerings are dominated by plate fin constructions, with tube shell and plate-type heat exchangers having niche applications. Heat transfer rates decrease as fluid flows down the length of a channel. There are several methods of augmenting heat transfer, one of which is to increase the surface area of a material that a flowing fluid contacts. Fins are used within channels to increase surface area without altering the overall size and shape of the channel itself. However, traditional plate-fin construction imposes multiple design constraints that inhibit performance, increase size and weight, result in structural reliability issues, make it unfeasible to meet future high temperature applications, and limit system integration opportunities. Simply increasing fin size or a number of fins to maximize surface area and augment heat transfer can result in designs that are too heavy and inefficient. The need remains for heat exchanger heat transfer augmentation features that are designed for and able to withstand high pressure and temperature applications using characteristics besides increased fin size or number.

New heat exchanger designs that take advantage of the capabilities of additive manufacturing are needed to further increase heat transfer performance, reduce pressure losses, and reduce size and weight.

### SUMMARY

In one aspect, a heat exchanger includes a plurality of longitudinally-extending first channels and a plurality of second channels fluidly isolated from the plurality of first channels. Each first channel includes a plurality of internal fins and a plurality of external fins. The internal fins extend from and are integrally formed with the internal walls of the first channel. The external fins connect adjacent first channels. The plurality of second channels is defined by external walls of the plurality of first channels and the plurality of external fins.

In another aspect, a heat exchanger channel includes a plurality of internal fins integrally formed with and extending from an internal wall of the channel and a center internal fin. The center internal fin is disposed between and connected to the plurality of internal fins.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a simplified cross-sectional view of a heat exchanger core with adjacent channels connected by external fins.
FIG. 2A is a cut away perspective view of one embodiment of a heat exchanger channel as illustrated in FIG. 1.
FIG. 2B is a perspective view of the internal fins of the heat exchanger channel of FIG. 2A.
FIG. 2C is a cross-sectional view of the heat exchanger channel taken along the 2C-2C line of FIG. 2A.
FIG. 3 is a cut away view of another embodiment of a heat exchanger channel having fins that are arranged along a length of the channel and extend into a flow path in alternating orientations.
FIG. 4 is a cut away view of yet another embodiment of a heat exchanger channel having fins that are staggered along a length of the channel and are oriented parallel to one another.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention. The figures may not be drawn to scale, and applications and embodiments of the present invention may include features, steps and/or components not specifically shown in the drawings.

### DETAILED DESCRIPTION

The present disclosure is directed to an additively manufactured heat exchanger core with channels having various internal fin configurations and arrangements designed to augment heat transfer. The disclosed heat exchanger core configurations are applicable to counter-flow heat exchanger designs and are specifically suited for application in supercritical CO₂ cycles, which operate at high pressure and depend heavily on heat transfer for cycle efficiency. Internal fins in each fluid channel can be additively manufactured in orientations, arrangements, and shapes to augment heat transfer. The present application discloses several embodiments of additively manufactured internal fin design and arrangement that utilize surface area, shape, and orientation to improve a rate of heat transfer.

Additive manufacturing processes can produce highly complex parts quickly and efficiently, and permit modifications to design specifications of a desired part, for example by modifying CAD specifications, without re-tooling casting or machining equipment used for traditional, subtractive manufacturing processes. Additive manufacturing allows complex design features to be incorporated into parts where those complex design features had proved infeasible using previous manufacturing techniques. While the disclosed heat exchanger cores have been developed using direct metal laser sintering, other additive manufacturing techniques may be employed, such as, for example, electron beam melting, electron beam powder bed fusion, laser powder deposition, directed energy deposition, wire arc additive process, electron beam wire, and selective laser sintering, as well as other powder bed methods in general. Powder bed methods work well with metals as well as plastics, polymers, composites, and ceramics. Additive manufacturing allows for the manufacture of channels with complex internal fin geometries and arrangements that can be integrally formed with channel walls to provide for uninterrupted heat conduction.

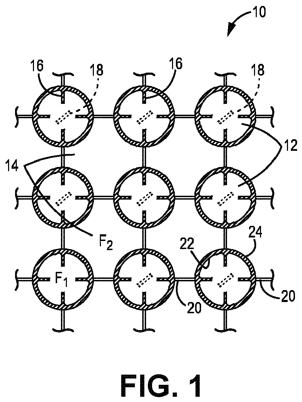

FIG. 1 is a simplified cross-sectional view of a counter-flow heat exchanger core. FIG. 1 shows heat exchanger core 10, fluid channels 12 and 14, internal fins 16, optional internal fins 18 (shown in phantom), external fins 20, internal walls 22, external walls 24, and fluids F₁ and F₂. A first fluid circuit is defined by fluid channels 12 and configured to deliver fluid F₁ along a length of channels 12 (i.e., into the page). Internal fins 16 and 18 are disposed in a fluid flow path in channels 12. Adjacent channels 12 are joined by external fins 20 forming a second fluid circuit therebetween formed by channels 14. Channels 14 are defined by external walls 24 of channels 12 and external fins 20. Fluid F₂ is delivered in an opposite direction from fluid F₁ (i.e., out of the page) in channels 14. Internal fins 16 and 18 in channels 12 augment heat transfer between fluids F₁ and F₂. Channels 12 and channels 14 are fluidly isolated.

Channels 12 extend longitudinally, i.e. into the page as illustrated in FIG. 1. Channels 12 can have a generally circular cross-section. (i.e., channels 12 can be cylindrical tubes). In other embodiments, channels 12 can have alternative shapes to optimize fluid flow dynamics and heat transfer. Channels 12 are configured to transmit a cooling fluid and channels 14 are configured to transmit a heating fluid but in other embodiments the two may be reversed. Channels 12 and channels 14 can transmit different fluids. For example, channels 12 can be configured to transmit a supercritical CO₂ and channels 14 can be configured to transmit air. Channels 12 are connected to adjacent channels 12 by external fins 20. External fins 20 can extend from and can be integrally formed with external walls 24 of channels 12 to provide uninterrupted conductive heat transfer. As illustrated in FIG. 1, four adjacent channels 12 are connected to each other by four external fins 20 to define each channel 14. In other embodiments, less than four or more than four adjacent channels 12 can be connected by external fins 20 to define channels 14 of differing shapes. Channels 12 can have diameters and wall thicknesses designed for particular applications. For example, channels 12 can be designed with wall thicknesses and cross-sectional diameters to accommodate pressurized fluids (e.g., supercritical CO₂). In some embodiments, walls of channels 12 can have a thickness greater than a thickness of external fins 20 to accommodate pressurized fluids in channels 12.

Channels 14 extend longitudinally and are defined by external walls 24 of channels 12 and external fins 20. Each channel 14 is disposed between adjacent channels 12 and external fins 20 such that channels 12 and external fins 20 surround each channel 14. Heat is transferred between fluid F₁ and fluid F₂ by external walls 24 of channels 12 and external fins 20. Portions of adjacent channels 14 are separated by external fins 20. External fins 20 can extend the length of each channel 12. As illustrated in FIG. 1, external fins 16 can be straight. External fins 20 together with circular channels 12 provide a box-like shape of channel 14 defined by adjacent sides joined by rounded concave corners. In other embodiments, the shape of channels 14 may be different, corresponding to the shape and arrangement of the external fins 20 and channels 12. Channels 14 are fluidly isolated from channels 12.

Internal fins 16 and 18 can be disposed in channels 12 to increase conductive surface area and augment heat transfer between fluids F₁ and F₂. Internal fins 16 and 18 can be integrally formed with internal walls 22 of channels 12. The incorporation of internal fins 16 and optional internal fins 18 can increase surface area without altering the size or shape of channels 12 or channels 14. The shape, size, and orientation of internal fins 16 and 18 have effects on flow, boundary layer, and heat transfer rate.

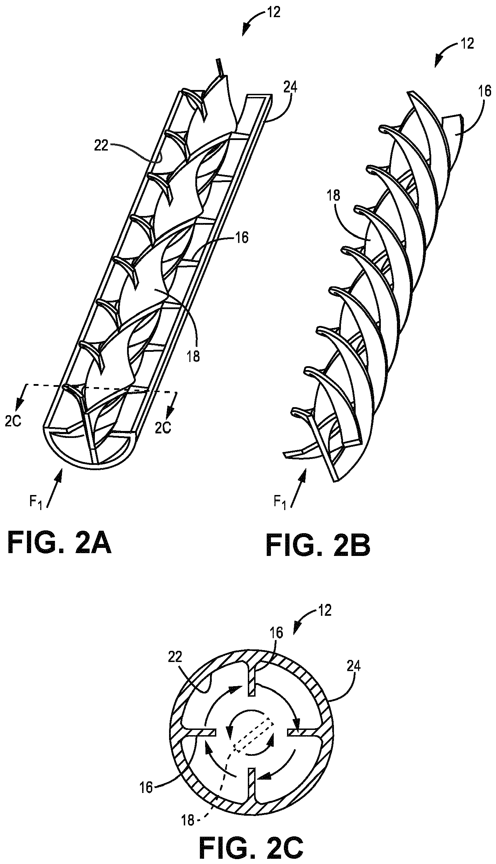

FIGS. 2A, 2B, and 2C show different views of channel 12 of FIG. 1 with internal fins 16 and optional internal fins 18. All channels 12 of FIG. 1 can have the same configuration. Channel 12 can be configured to transmit fluid F₁ in a flow direction illustrated by the arrow, substantially axially with respect to channel 12. FIG. 2A is a cutaway perspective view of channel 12. FIG. 2B is a perspective view of internal fins 16 and 18 without the channel walls. FIG. 2C is an enlarged cross-sectional view of channel 12 taken along the 2C-2C line of FIG. 2A. As illustrated in FIGS. 2A-2C, internal fins 16 are disposed in a spiraling orientation along internal wall 22 of channel 12 and internal fin 18 is twisted and disposed in a center of channel 12. The arrows in FIG. 2C indicate a direction in which internal channels 16 spiral along internal walls 22 and a direction in which internal fin 18 twists. FIGS. 2A-2C are discussed together.

As illustrated, channel 12 extends longitudinally (i.e. axially) and has a circular cross-section. Channel 12 can be configured to transmit a heating fluid. Internal fins 16 extend from and are integrally formed with internal walls 22 of the channel 12. Optional internal fins 18 connect to and are integrally formed with internal fins 16.

Internal fins 16 are arranged in a spiral orientation along internal wall 22 and can extend the length of channel 12. FIG. 2C shows four internal fins 16 spaced equal distances from each other along a circumference of channel 12. In other embodiments, there may be more than four internal fins 16 or fewer than four internal fins 16. Internal fins 16 can also have unequal spacing along internal wall 22 of channel 12 in other embodiments. Internal fins 16 extend into channel 12. A width of internal fins 16 or distance to which internal fins 16 extend from internal wall 22 into channel 12 can vary. In some embodiments, internal fins can have a width less than half a diameter of channel 12 or less than one-third the diameter of channel 12, for example, as illustrated in FIGS. 2A-2C. Internal fins 16 can provide a distinct advantage for two-phase flow applications such as supercritical CO₂ cycles. Internal fins 16 can drive the liquid phase of the fluid toward internal walls 22, which promotes heat transfer, and allow the vapor, which is a less effective heat transfer medium, to collect in the center.

In some embodiments, internal fin 18 can be disposed in a center of channel 12 between internal fins 16. Internal fin 18 is optional and can be excluded in some embodiments. Internal fin 18 can be twisted and extend the length of channel 12. Internal fin 18 is disposed between internal fins 16 and is connected to internal fins 16 at varying locations along the length of channel 12. As illustrated in FIG. 2C, internal fin 18 can twist in an opposite direction of the spiral orientation of internal fins 16. As internal fin 18 twists, it connects to discrete locations on internal fins 16, as illustrated in FIGS. 2A and 2B.

The spiraling or twisted shapes of internal fins 16 and 18 augment heat transfer by increasing the heat transfer coefficient. The shape of internal fins 16 and 18 also creates a more turbulent flow which allows for heat transfer through both conduction and convection. The spiraling or twisted shapes provide advantages for two phase fluid flow by forcing liquid toward the channel wall while vapor collects in the center, enhancing heat transfer. The spiraling or twisted shapes may also reduce a pressure drop. The shape and orientation of internal fins 16 and 18 in this embodiment allows for augmented heat transfer without modifying the size and shape of channels 12 and 14.

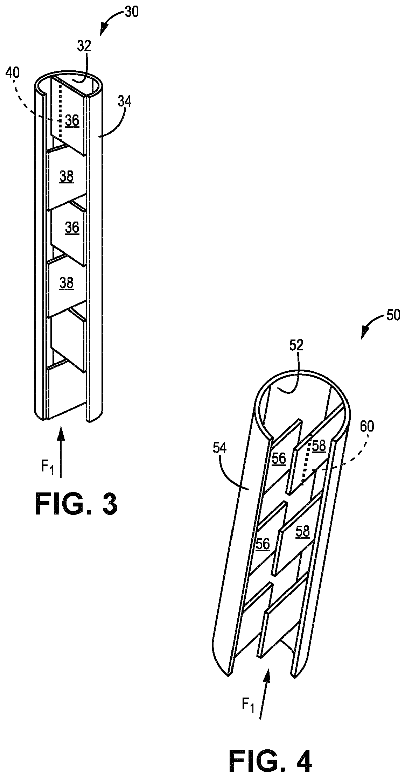

FIGS. 3 and 4 illustrate different internal fin designs for use in heat exchanger core 10 in place of internal fins 16 and 18.

FIG. 3 is a cutaway view of channel 30 for use in heat exchanger 10 in place of channels 12. FIG. 3 shows channel 30 with internal wall 32 and external wall 34, and internal fins 36 and 38. FIG. 3 illustrates a single channel 30 of plurality of channels 30. Internal fins 36 and 38 extend from and are integrally formed with internal wall 32 of channel 30. In some embodiments, internal fins 36 and 38 can extend a full width of channel 30. In other embodiments, one or both fins 36 and 38 can extend across a partial width of channel 30. Line 40 represents a fin that extends a width less than a full width of channel 30.

As illustrated in FIG. 3, channel 30 extends longitudinally and can have a circular cross-section. Channel 30 is configured to transmit a heating fluid in a flow directed illustrated by the arrow for fluid F₁. Internal fins 36 and 38 extend from and are integrally formed with internal walls 32 of channel 30. Internal fins 36 and 38 are arranged along a flow length of channel 30.

Internal fins 36 and 38 have a shortened length such that multiple internal fins 36 and 38 can be spaced along the flow length of channel 30. Each internal fin 36 extends a fraction of the length of channel 30 and can extend a full width of the channel 30. Internal fins 36 and 38 are arranged in a stacked and alternating relationship along the flow length such that each internal fin 36 is adjacent to an internal fin 38 along the length of channel 30. Internal fins 36 and 38 can alternate in orientation such that each internal fin 36 is perpendicular to each internal fin 38. As illustrated in FIG. 3, internal fins 36 and 38 cross a center axis of channel 30, thereby dividing channel 30 in half. Flow is separated into the halves which rotate 90 degrees along the length of channel 30. In other embodiments, internal fins 36 and 38 can be disposed off-center, thereby dividing channel 30 into unequal parts or internal fins 36 and 38 can be arranged at different angles relative to one another. Internal fins 36 and 38 can be stacked closely together and can be contiguous or arranged such that there is a small space or no space between each internal fin 36 and 38 along the length of channel 30. For example, adjacent internal fins 36 and 38 can be in contact. In other embodiments, internal fins 36 can be spaced apart by greater lengths.

In some embodiments, one or both of internal fins 36 and 38 can extend less than the full width of the channel 30. Line 40 represents a terminal edge location for embodiments of internal fins that extend less than the full width of the channel 30 but otherwise share all characteristics of internal fins 36.

As illustrated in FIG. 3, edges of internal fins 36 and 38 are disposed perpendicular to an axis of channel 30. In other embodiments, internal fins 36 and 38 may extend across the width of channel 30 at a slant.

Internal fins 36 and 38 interrupt the boundary layer which allows for better heat transfer. Different applications of heat exchanger core 10 having channels 30 may call for different internal fin widths to interrupt the boundary layer. Heat transfer rates typically decrease along the flow length. The incorporation of shortened and stacked internal fins 36 and 38 interrupts flow and allows the fluid to continually make new contact with internal fins 36 and 38 thereby restarting the heat transfer process at each fin 36 and 38. The incorporation of internal fins 36 and 38 into channel 30 can help maintain the heat transfer rate along the length of channel 30 and improve heat transfer overall without modifying the size or shape of channels 30 or 14.

FIG. 4 is a cutaway view of channel 50 for use in heat exchanger core 10 in place of channels 12. FIG. 4 shows channel 50 with internal wall 52 and external wall 54, and internal fins 56 and 58. FIG. 4 illustrates a single channel 50 of a plurality of channels 50 configured for use in heat exchanger core 10. Internal fins 56 and 58 extend from and are integrally formed with internal wall 52 of channel 50. Internal fins 56 and 58 can extend a full width of channel 50, connecting to internal wall 52 on both ends of fins 56 and 58. In other embodiments, one or both fins 56 and 58 can extend across a partial width of channel 50. Line 60 represents a fin that extends a width less than a full width of channel 50.

As illustrated in FIG. 4, channel 50 is elongated and can have a circular cross-section. Channel 50 is configured to transmit a heating fluid in a flow directed illustrated by the arrow for fluid F₁. Internal fins 56 and 58 extend from and are integrally formed with internal walls 52 of channel 50. Internal fins 56 and 58 are arranged along a flow length of channel 50.

Internal fins 56 and 58 have a shortened length such that multiple internal fins 56 and 58 can be spaced along the flow length of the channel 50. Each internal fin 56 and 58 extends a fraction of the length of channel 50 and can extend a full width of channel 50. Internal fins 56 and 58 are staggered along the flow length and oriented parallel to each other. Internal fins 56 and 58 alternate in position across a width of the channel 50 such that a cross-sectional view would show internal fins alternating between halves of the circular cross-section of channel 50. Internal fins 56 can be disposed parallel to an axis of channel 50 and can be aligned along the flow length of channel 50. Internal fins 58 can be disposed parallel to the axis of channel 50 and can be aligned along the flow length of channel 50. Internal fins 56 can be axially offset from internal fins 58 along the flow length of channel 50 to provide a staggered arrangement. Adjacent internal fins 56 can be axially separated. Adjacent internal fins 58 can be axially separated. An axial distance between adjacent internal fins 56 and between adjacent internal fins 58 along the length of channel 50 can be designed to optimize fluid dynamics and heat transfer. A radial distance between adjacent internal fins 56 and 58 can also be designed to optimize fluid dynamics and heat transfer.

In some embodiments, one or both internal fins 56 and 58 can extend less than the full width of the channel 50. Line 60 represents a terminal edge location for embodiments of internal fins that extend less than the full width of the channel 50 but otherwise share all characteristics of internal fins 56.

As illustrated in FIG. 4, edges of internal fins 56 and 58 are disposed perpendicular to an axis of channel 50. In other embodiments, internal fins 56 and 58 may extend across the width of channel 50 at a slant.

Internal fins 56 and 58 interrupt the boundary layer which allows for better heat transfer. Different applications of heat exchanger core 10 may call for different widths to interrupt the boundary layer. Heat transfer rates typically decrease along the flow length. The incorporation of shortened and staggered fins 56 and 58 interrupts fluid flow and allows the fluid to continually make new contact with internal fins 56 and 58 thereby restarting the heat transfer process at each fin 56 and 58. The incorporation of shortened and staggered internal fins 56 and 58 into channel 50 can help maintain a heat transfer rate along the length of channel 50 and improve heat transfer overall without modifying the size or shape of channels 50 or 14.

The disclosed internal fin configurations and arrangements can provide improved heat transfer in counter-flow heat exchanger applications by interrupting or suppressing boundary layer growth. Varying configurations of internal fins can be adopted to optimize heat transfer without modifying the size and shape of counter-flow channels. Internal fins are integrally formed with channel walls to provide uninterrupted conductive heat transfer.

### Discussion of Possible Embodiments

The following are non-exclusive descriptions of possible embodiments of the present invention.

A heat exchanger includes a plurality of first channels extending longitudinally and a plurality of second channels. Each first channel includes a plurality of internal fins extending from and integrally formed with an internal wall, and a plurality of external fins. The external fins connect adjacent first channels. The plurality of second channels is defined by external walls of the plurality of first channels and the plurality of external fins. The plurality of second channels is fluidly isolated from the plurality of first channels.

The heat exchanger of the preceding paragraph can optionally include, additionally and/or alternatively, any one or more of the following features and/or configurations:

A further embodiment of the heat exchanger of the preceding paragraphs, wherein the heat exchanger is additively manufactured.

A further embodiment of the heat exchanger of any of the preceding paragraphs, wherein each first channel has a circular cross-section.

A further embodiment of the heat exchanger of any of the preceding paragraphs, wherein internal fins of the plurality of internal fins are arranged in a stacked or axially staggered relationship along a flow length of each first channel.

A further embodiment of the heat exchanger of any of the preceding paragraphs, wherein the internal fins extend a full width of each first channel.

A further embodiment of the heat exchanger of any of the preceding paragraphs, wherein the internal fins are arranged in a staggered relationship along the flow length, alternating in position across a width of each first channel, and wherein the internal fins are parallel.

A further embodiment of the heat exchanger of any of the preceding paragraphs, wherein the internal fins are stacked along the flow length with adjacent internal fins disposed perpendicular to one another.

A further embodiment of the heat exchanger of any of the preceding paragraphs, wherein the internal fins of the plurality of internal fins extend less than a full width of the channel.

A further embodiment of the heat exchanger of any of the preceding paragraphs, wherein the internal fins are arranged in a staggered relationship along the flow length, alternating in position across a width of each first channel, and wherein the internal fins are parallel.

A further embodiment of the heat exchanger of any of the preceding paragraphs, wherein the internal fins are stacked along the flow length with adjacent internal fins disposed perpendicular to one another.

A further embodiment of the heat exchanger of any of the preceding paragraphs, wherein internal fins of the plurality of internal fins are arranged in a spiraling orientation along the internal wall.

A further embodiment of the heat exchanger of any of the preceding paragraphs, wherein the internal fins are circumferentially spaced about the channel and extend a flow length of the channel.

A further embodiment of the heat exchanger of any of the preceding paragraphs, further comprising a center internal fin, wherein the center internal fin is disposed between and connected to the internal fins.

A further embodiment of the heat exchanger of any of the preceding paragraphs, wherein the center internal fin is twisted.

A further embodiment of the heat exchanger of any of the preceding paragraphs, wherein the center internal fin twists in a direction opposite of a direction in which the internal fins spiral along the internal wall.

A heat exchanger channel includes a plurality of internal fins and a center internal fin. The internal fins are integrally formed with and extend from an internal wall of the channel. The center internal fin is disposed between and connected to the plurality of internal fins.

The heat exchanger channel of the preceding paragraph can optionally include, additionally and/or alternatively, any one or more of the following features and/or configurations;

A further embodiment of heat exchanger channel of the preceding paragraphs, wherein the heat exchanger channel is additively manufactured.

A further embodiment of the heat exchanger channel of any of the preceding paragraphs, wherein internal fins of the plurality of internal fins are uniformly spaced about a circumference of the internal wall of the channel and extend a flow length of the channel.

A further embodiment of the heat exchanger channel of any of the preceding paragraphs, wherein the internal fins are arranged in a spiraling orientation along the internal wall.

A further embodiment of the heat exchanger channel of any of the preceding paragraphs, wherein the center internal fin is twisted.

While the invention has been described with reference to an exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A heat exchanger (10) comprising;
a plurality of first channels (12) extending longitudinally, each first channel comprising:
a plurality of internal fins (16, 36, 38, 56, 58) extending from and integrally formed with an
internal wall (22) of the first channel; and
a plurality of external fins (20), wherein the external fins connect adjacent first channels; and
a plurality of second channels (14) defined by external walls (24) of the plurality of first channels and the plurality of external fins, wherein the plurality of second channels is fluidly isolated from the plurality of first channels.

2. The heat exchanger of claim 1, wherein the heat exchanger (10) is additively manufactured.

3. The heat exchanger of claim 1 or 2, wherein each first channel (12) has a circular cross-section.

4. The heat exchanger of any preceding claim, wherein internal fins (36, 38, 56, 58) of the plurality of internal fins are arranged in a stacked or axially staggered relationship along a flow length of each first channel.

5. The heat exchanger of claim 4, wherein the internal fins (36, 38, 56, 58) extend a full width of each first channel.

6. The heat exchanger of claim 5, wherein the internal fins (58, 56) are arranged in a staggered relationship along the flow length, alternating in position across a width of each first channel, and wherein the internal fins are parallel.

7. The heat exchanger of any of claims 1 to 3, wherein the internal fins (36, 38) are stacked along the flow length with adjacent internal fins disposed perpendicular to one another.

8. The heat exchanger of any of claims 1 to 3, wherein the internal fins (36, 38, 56, 58) of the plurality of internal fins extend less than a full width of the channel.

9. The heat exchanger of claim 8, wherein the internal fins are arranged in a staggered relationship along the flow length, alternating in position across a width of each first channel, and wherein the internal fins are parallel; or
wherein the internal fins are stacked along the flow length with adjacent internal fins disposed perpendicular to one another.

10. The heat exchanger of any of claims 1 to 3, wherein internal fins (16) of the plurality of internal fins are arranged in a spiraling orientation along the internal wall.

11. The heat exchanger of claim 10, wherein the internal fins (16) are circumferentially spaced about the channel and extend a flow length of the channel.

12. The heat exchanger of claim 11, further comprising a center internal fin (18), wherein the center internal fin is disposed between and connected to the internal fins (16); optionally
wherein the center internal fin (18) is twisted; further optionally
wherein the center internal fin (18) twists in a direction opposite of a direction in which the internal fins spiral along the internal wall.

13. A heat exchanger channel (12) comprising;
a plurality of internal fins (16) integrally formed with and extending from an internal wall of the channel;
a center internal fin (18), wherein the center internal fin is disposed between and connected to the plurality of internal fins.

14. The heat exchanger channel of claim 13, wherein the heat exchanger channel is additively manufactured.

15. The heat exchanger channel of claim 13 or 14, wherein internal fins of the plurality of internal fins (16) are uniformly spaced about a circumference of the internal wall of the channel and extend a flow length of the channel; or
wherein the internal fins (16) are arranged in a spiraling orientation along the internal wall; and optionally
wherein the center internal fin (18) is twisted.
